# EUROPÄISCHE PATENTSCHRIFT

(11) **EP 0 697 309 B1**
(45) Veröffentlichungstag und Bekanntmachung des Hinweises auf die Patenterteilung: **09.06.1999**
(21) Anmeldenummer: 95110436.3
(22) Anmeldetag: 05.07.1995
(51) Int. Cl.: B60Q 1/26

(54) **Lichtabgabeoptik für Fahrzeugleuchten**
Light diffuser for vehicle lights
Diffuseur de lumière pour feux de véhicule

(30) Priorität: 19.07.1994 DE 4425401
(43) Veröffentlichungstag der Anmeldung: 21.02.1996
(73) Patentinhaber: ITT Automotive Europe GmbH, 60488 Frankfurt (DE)
(72) Erfinder: Feger, Rolf, D-74321 Bietigheim-Bissingen (DE); Holzmacher, Günther, D-71679 Asperg (DE); Lendle, Reiner, D-74855 Hassmersheim (DE)
(74) Vertreter: Dreiss, Fuhlendorf, Steimle & Becker

(56) Entgegenhaltungen:
- EP-A- 0 677 696
- DE-A- 4 324 037
- DE-C- 4 322 607
- FR-A- 2 607 081

## Beschreibung

Die Erfindung betrifft eine Lichtabgabeoptik für Fahrzeugleuchten, insbesondere für Kraftfahrzeugleuchten, mit mehreren Funktionsbereichen zur Abgabe verschiedener Lichtsignale, wobei in den Funktionsbereichen von einer Lichtquelle abgege-benes Licht durch die Lichtabgabeoptik in Licht der vorge-schriebenen Signalfarbe verändert wird. Aus stilistischen Gründen besteht bereits seit einiger Zeit das Bestreben, der Abdeckscheibe der Fahrzeugscheibe trotz unterschiedlicher abzugebender Signalfarben in ausgeschaltetem Zustand farblich ein möglichst einheitliches (monochromatisches) Aussehen zu verleihen. Unter dieser Zielrichtung sind bereits eine Reihe von Lösungsvorschlägen bekannt.

Aus der gattungsgemäßen Patentschrift DE 43 22 607 C1 ist beispielsweise eine Lichtscheibe für eine Fahrzeugleuchte mit mehreren Funktionen bekannt, die als benachbarte Funktionsbereiche einen transparenten gelben Bereich für das Blinklicht und einen glasklaren Bereich für weißes Rückfahrlicht aufweist. Zur Vereinheitlichung des farblichen Aussehens der Lichtscheibe bei ausgeschalteter Fahrzeugleuchte erstrecken sich Streifen aus dem gleichen lichtdurchlässigen gelben Material, aus dem der Bereich des Blink-lichtes besteht, durch den Bereich des weißen Rückfahrlichtes. Diese gelben Streifen sind als lichtablenkende Prismenoptik geformt, welche von der Lichtquelle ausgesandte und durch sie hindurchtretende Lichtstrahlen derart ablenken, daß diese die durch die glasklaren Streifen hindurchtretenden Lichtstrahlen schneiden.

Die gelben Streifen weisen neben ihrer Farb- und Materialidentität mit dem benachbarten Blinklichtbereich eine recht gute Farbbrillanz auf. Um aber den Farbort des weißen Rückfahrlichtes trotz der Ablenkung des nunmehr gelb gefärbten, durch die gelben Streifen hindurchgetretenen Lichtanteiles nicht zu stark nach gelb zu verschieben, müssen die gelben Streifen relativ schmal ausgeführt werden. Durch diese Restriktion bedingt ist trotz aller Fortschritte noch immer keine optimale farbliche Vereinheitlichung der Lichtscheibe erreichbar.

Inzwischen wurde auch vorgeschlagen, derartig geformte trans-parente Streifen von roter Farbe in dem Funktionsbereich des gelben Blinklichtes oder des weißen (glasklaren) Rückfahrlichtes vorzusehen, wenn diesen Funktionsbereichen rote Funktionsbereiche benachbart sind. Prinzipiell entfallen auf diesen Vorschlag aber die gleichen Vorteile und Nachteile, die auch für die Lösung gemäß DE 43 22 607 C1 zutreffen.

Es ist aber auch ein anderes Lösungsprinzip für die farbliche Vereinheitlichung der Abdeckscheibe einer Fahrzeugleuchte in ausgeschaltetem Zustand bekannt (beispielsweise aus der DE 39 22 830 C2), wonach die transparente Abdeckscheibe insgesamt eine einheitliche Farbe aufweist und die vorgeschriebenen Signalfarben der Funktionsbereiche durch subtraktive Farbmischung, das heißt, durch Anordnen eines von der Farbe der Abdeckscheibe abhängigen Lichtfilters in den jeweiligen Strahlengang zwischen Lichtquelle und Abdeckscheibe, erzeugt wird.

Auch dieser Lösung haften beeinflußbare Nachteile an. Die Farbe und die Farbsättigung der Abdeckscheibe ist nicht frei wählbar.

Die Abdeckscheibe muß beispielsweise in einem hellen Rot bzw. in Rosa ausgeführt sein, weil nur dann durch einen blauen bzw. blaugrünen Farbfilter in Verbindung mit dieser Abdeckscheibe ein weißes Rückfahrlicht erzeugt werden kann.

Außerdem besteht noch die Gefahr, daß sich die zusätzlichen Farbfilter hinter der relativ hellen Abdeckscheibe farblich abheben, wodurch wiederum der homogene Farbeindruck der Abdeckscheibe gestört wird.

Aufgabe der Erfindung ist es nunmehr, eine gegenüber den bekannten Lösungen weiter verbesserte farbliche Vereinheitlichung der Lichtabgabeoptik einer Fahrzeugleuchte zu erreichen.

Erfindungsgemäß wird die Aufgabe durch eine Lichtabgabeoptik für Fahrzeugleuchten mit den Merkmalen des Oberbegriffs des Anspruchs 1 gelöst, bei welcher die transparente Abdeckscheibe insgesamt in einem roten Farbton eingefärbt ist und zumindest bestimmte Funktionsbereiche der Abdeckscheibe streifenförmig ausgebildet sind, wobei in einem Hellrot bzw. Rosa ausgeführte Streifen mit in einem dunkleren Rot ausgeführten Streifen abwechseln. Die in dunklerem Rot ausgeführten Streifen sind mit der Form einer lichtablenkenden Prismenoptik, vorzugsweise einer nicht wirksamen Rückstrahleroptik, ausgebildet und sind dadurch in der Lage, von der Lichtquelle kommendes Licht in solche Winkelbereiche hinter der Abdeckscheibe abzulenken, die außerhalb eines vorgeschriebenen Gesichtsfeldes liegen.

Außerdem ist zumindest in einem dieser bestimmten Funktionsbereiche im Strahlengang zwischen der Lichtquelle und der Abdeckscheibe zusätzlich ein Farbfilter mit solchen Eigenschaften angeordnet, daß die Farbe des von der Lichtquelle kommenden, durch den Farbfilter und die hellroten bzw. rosafarbenen Streifen der Abdeckscheibe hindurchtretenden Lichtes in die für den betreffenden Funktionsbereich vorgeschriebene Signalfarbe verändert wird.

Gegenüber den bekannten Lösungen weist eine solche Lichtabgabeoptik bei ausgeschalteter Fahrzeugleuchte ein im Bezug auf die farbliche Vereinheitlichung verbessertes Erscheinungsbild auf, ohne dadurch die einwandfreie Signalfunktion der Lichtabgabeoptik bzw. der Fahrzeugleuchte zu stören. In den bestimmten Funktionsbereichen, in denen die Farbe des abzugebenen Lichtsignales von der Farbe der Abdeckscheibe bei ausgeschaltetem Zustand der Fahrzeugleuchte unterscheidet, wird der grundsätzlich vorhandene rote Farbton durch die in dunklerem Rot ausgeführten Streifen verstärkt und dabei dem Gesamtfarbeindruck der Abdeckscheibe bei ausgeschalteter Fahrzeugleuchte sehr stark angenähert. Die spezielle Formgestaltung der in dunklerem Rot ausgeführten Streifen verhindert, daß die Farbe des abzugebenden Lichtsignales in dem betreffenden Funktionsbereich unzulässig von der vorgeschriebenen Signalfarbe abweicht.

Besonders vorteilhaft für eine optimale Vereinheitlichung des farblichen Erscheinungsbildes der Abdeckscheibe bei ausge-schalteter Fahrzeugleuchte ist es, wenn gemäß Anspruch 2 die gesamt Abdeckscheibe, das heißt alle Funktionsbereiche der Abdeckscheibe, mit abwechselnden hellroten bzw. rosafarbenen Streifen und in dunklerem Rot ausgeführten Streifen ausgeführt ist.

Im Anspruch 3 sind vorteilhafte Farbkombinationen von Abdeckscheibe und zusätzlichen Farbfiltern angegeben, wobei die Farbauswahl des zusätzlichen Filters für den jeweiligen Funktionsbereich von einer farblichen Gestaltung der Abdeckscheibe gemäß Anspruch 2 ausgeht.

In den Merkmalen 4 bis 6 sind verschiedene vorteilhafte konstruktive Ausgestaltungen für die unterschiedlichen Streifen in den betreffenden Funktionsbereichen der Abdeckscheibe angegeben, deren Auswahl jeweils nach technischen bzw. wirtschaftlichen Gesichtspunkten oder Erfordernissen erfolgen kann.

Die Merkmale des Anspruchs 7 sind darauf gerichtet, den größten Anteil des von der Lichtquelle kommenden und durch den zusätzlichen Farbfilter hindurchgetretenen Lichtes zielgerichtet durch die hellroten bzw. rosafarbenen Streifen der Abdeckscheibe hindurchzuleiten. Dadurch ist der Lichtanteil, der durch die in dunklerem Rot ausgeführten Streifen hindurchgeleitet wird und zu einer ungewünschten Farbveränderung des Signallichtes führen kann, vorteilhaft gering. Dementsprechend größer ist die Lichtmenge, welche das eigentliche Farbsignal bildet. Außerdem bietet diese Maßnahme die Möglichkeit, die in dunklerem Rot ausgeführten Streifen relativ breit auszuführen und somit zu einer noch stärkeren Vereinheitlichung des farblichen Aussehens der Abdeckscheibe bei ausgeschalteter Fahrzeugleuchte beizutragen.

Von Vorteil ist auch eine Ausgestaltung gemäß Anspruch 8, die auf einen zusätzlichen Effekt der Vereinheitlichung des farblichen Erscheinungsbildes gerichtet ist, durch den die Wirkung der bisherigen Maßnahmen zusätzlich unterstützt wird.

Eine andere vorteilhafte Ausgestaltung gemäß Anspruch 9 geht davon aus, daß die in dunklerem Rot ausgeführten Streifen als lichtundurchlässige Streifen ausgeführt sind. Bei Anwendung dieser Maßnahme ist es möglich, ein engeres Raster der in dunklerem Rot ausgeführten Streifen zu verwirklichen, was ebenfalls zu einer Intensivierung des roten Farbeindruckes bei benachbarten hellroten bzw. rosafarbenen Streifen führt.

Da andererseits kein Licht durch die lichtundurchlässigen Streifen hindurchtreten kann, ist auch keine unzulässige Farbveränderung in Bezug auf die abzugebende Signalfarbe zu befürchten.

Im Anspruch 10 sind mehrere vorteilhafte Möglichkeiten gekennzeichnet, wie derartige lichtundurchlässige in dunklerem Rot ausgeführte Streifen gestaltet sind.

Durch die Ansprüche 11 und 12 sind weitere vorteilhafte Ausgestaltungen für den Fall gekennzeichnet, daß die angestrebte einheitliche Ruhefarbe der Abdeckscheibe bei ausgeschalteter Leuchte von rot abweichen soll.

Anhand von Ausführungsbeispielen wir die Erfindung nachfolgend näher beschrieben. In den zugehörigen Zeichnungen zeigen:
- Fig.1: eine Kraftfahrzeugleuchte mit einer erfindungsgemäßen Lichtabgabeoptik,
- Fig. 2: einen Schnitt entlang der Linie II - II aus Figur 1,
- Fig. 3: einen vergrößerten Abschnitt einer erfindungsgemäßen Lichtabgabeoptik aus Figur 2,
- Fig. 4: eine andere Ausführung einer erfindungsgemäßen Lichtabgabeoptik und
- Fig. 5: eine weitere Ausführung einer erfindungsgemäßen-Lichtabgabeoptik.

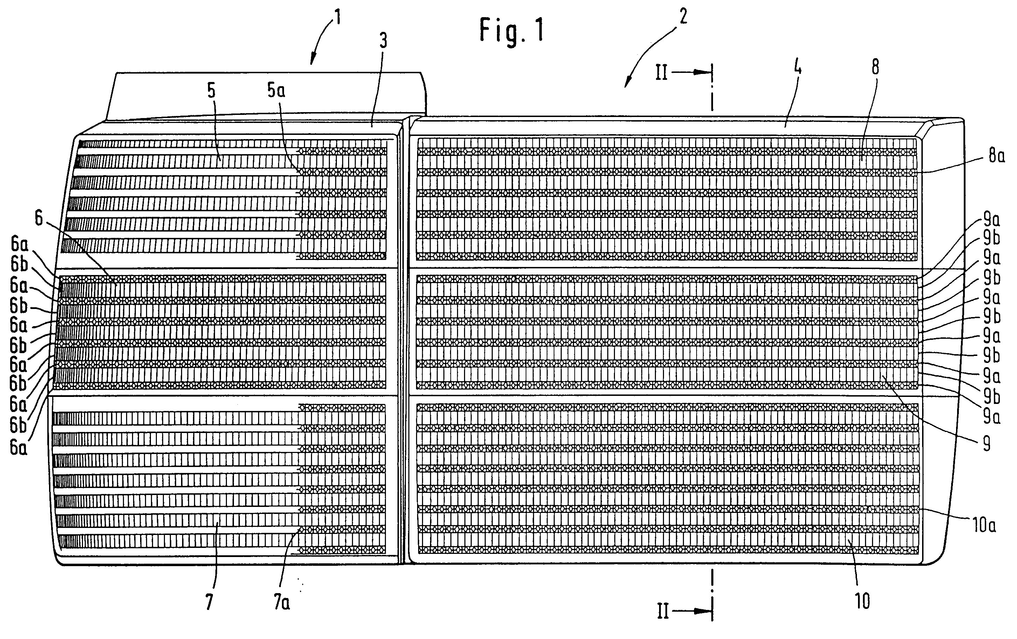

In Figur 1 ist eine Signalleuchtenkombination dargestellt, welche an der linken Seite eines Fahrzeughecks anzuordnen ist und aus einer ersten Signalleuchte 1 und einer zweiten Signalleuchte 2 besteht. Die erste Signalleuchte 1 ist an ein feststehendes Teil der Fahrzeugkarosserie und die Signalleuchte 2 an die Heckklappe des Fahrzeuges anzubauen.

Die Signalleuchte 1 weist eine Abdeckscheibe 3 und die Signalleuchte 2 weist eine Abdeckscheibe 4 auf. Beide Signallleuchten 1, 2 besitzen gleichermaßen drei übereinander angeordnete Abschnitte, denen verschiedene Funktionsbereiche für unterschiedliche Lichtsignale zugeordnet sind. Der obere Abschnitt 5 der Abdeckscheibe 3 entspricht dem Funtionsbereich des Bremslichtes, der mittlere Abschnitt 6 der Abdeckscheibe 3 entspricht dem Funktionsbereich des Blinklichtes, der untere Abschnitt 7 der Abdeckscheibe 3 entspricht dem Funktions-bereich des Schlußlichtes, der obere Abschnitt 8 der Abdeckscheibe 4 übt keine besondere Signalfunktion aus, der mittlere Abschnitt 9 der Abdeckscheibe 4 enthält den Funktionsbereich des Rückfahrlichtes und der untere Abschnitt 10 der Abdeckscheibe 4 enthält letztendlich den Funktionsbereich des Nebelschlußlichtes.

Die Abschnitte 5, 7, 8 und 10 der transparenten Abdeckscheiben 3, 4 sind ihrer Signalfunktion entsprechend im normal üblichen Signalrot gehalten, so daß sie von der jeweiligen Lichtquelle kommendes Licht beim Durchtritt durch die Abdeckscheibe 3, 4 unmittelbar in der vorgeschriebenen Signalfarbe färben. In den Abschnitt 7 ist zusätzlich die Funktion des Rückstrahlers integriert. Dazu sind in dem Abschnitt 7 Streifen 7a von lichttechnisch wirksamen Rückstrahlertripeln integriert. Zwecks Vereinheitlichung des Aussehens der Abdeckscheibe bei ausgeschalteten Signalleuchten 1 und 2 weisen auch die anderen Abschnitte 5, 6,8,9,10 prinzipiell die gleiche streifenförmige Struktur auf wie der Abschnitt 7, wobei jedoch die Rückstrahlertripeln der Streifen 5a,6a,8a,9a,10a lichttechnisch unwirksam gemacht worden sind.

Im Abschnitt 6 mit dem Funktionsbereich des Blinklichtes und im Abschnitt 9 mit dem Funktionsbereich des Rückfahrlichtes sind die Streifen 6a und 9a mit der Struktur von lichttechnisch unwirksamen Rückstrahlertripeln in dem gleichen kräftigen Signalrot ausgeführt, wie die übrigen Abschnitte 5,7,8 und 10 der Abdeckscheiben 3 und 4. Die abwechselnd mit den Streifen 6a, 9a angeordneten Streifen 6b und 9b sind Hellrot bzw. Rosa gehalten. Damit weichen die Ruhefarben der Abschnitte 6 und 9 von der Farbe des von diesen Abschnitten abzugebenden jeweiligen Lichtsignales ab.

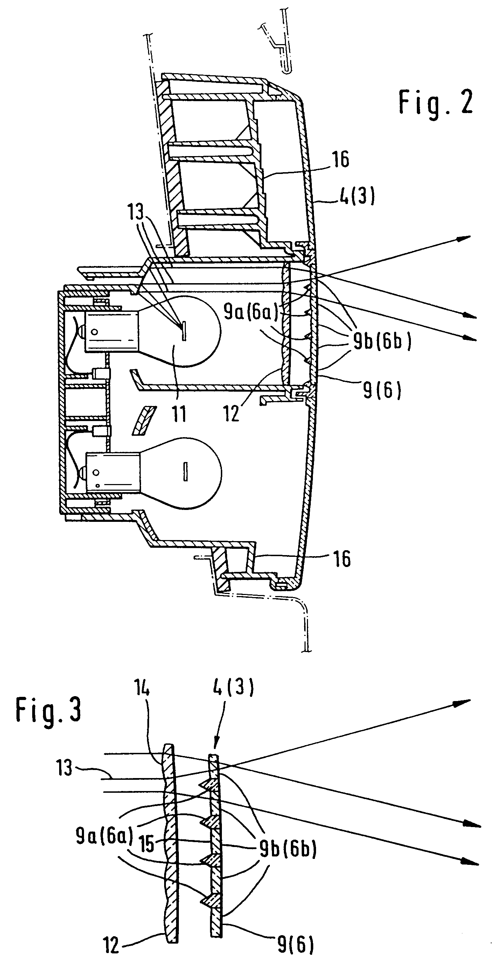

Aus der Figur 2 ist im wesentlichen der Funktionsbereich des Rückfahrlichtes ersichtlich. Der Funktionsbereich des Blinklichtes gleicht prinzipiell diesem Funktionsbereich des Rückfahrlichtes. Deshalb trifft die nachfolgende Beschreibung des Funktionsbereiches des Rückfahrlichtes prinzipiell auch für den Funktionsbereich des Blinklichtes zu, auf verschiedene Unterschiede wird gesondert hingewiesen.

Um das von einer Lichtquelle 11 ausgesandte, zumindest annähernd weiße Licht, welches nach dem Durchtritt durch den Abschnitt 9 (bzw. 6) der Abdeckscheibe 4 (bzw. 3) als Lichtsignal abgegeben wird, in der vorgeschriebenen Signalfarbe zu färben, ist in dem Strahlengang des Lichtes zwischen der Lichtquelle 11 und dem Abschnitt 9 (bzw. 6) ein zusätzlicher Farbfilter 12 angeordnet. In Abstimmung auf die hellroten bzw. rosafarbenen Streifen 9b (6b) ist der Farbfilter 12 im Falle des Rückfahrlichtes von blauer bzw. blaugrüner Farbe oder im Falle des Blinklichtes von gelber Farbe. Das von der Lichtquelle 11 abgegebene Licht, wovon in Figur 2 nur einige Lichtstrahlen 13 angedeutet sind, durchquert den Farbfilter 12 und danach zum größten Teil die hellroten bzw. rosafarbenen Streifen 9b (bzw. 6b) und wird dabei durch subtraktive Farbsynthese im Falle des Rückfahrlichtes zu einem weißen Lichtsignal oder im Falle des Blinklichtes zu einem gelben bzw. gelborangenen Lichtsignal gefärbt. Derjenige Lichtanteil, der nach dem Passieren des Farbfilters 12 durch die in dunklerem Rot ausgeführten Streifen 9a (6a) hindurchgeleitet wird, wird aufgrund der geometrischen Form der Streifen 9a (bzw. 6a) in solche Winkelbereiche hinter der Abdeckscheibe 4 (bzw. 3) abgelenkt, die außerhalb eines vorgeschriebenen Gesichtsfeldes liegen. Dadurch wird dieser Lichtanteil, der zu einer unzulässigen Verschiebung des Farbortes der vorgeschriebenen Signalfarbe führen könnte, in dem vorgeschriebenen Ge-sichtsfeld nicht wirksam. Damit entspricht das abgegebene Lichtsignal den Vorschriften.

Aus den Figuren 3 bis 5 sind weitere Einzelheiten einer erfindungsgemäßen Lichtabgabeoptik in verschiedenen Ausführungen ersichtlich. Es ist erkennbar, daß der Farbfilter 12 an seiner der Lichtquelle 11 zugewandten Seite mit streifenförmig angeordneten Sammellinsen 14 ausgestattet ist. Diese Streifen von Sammellinsen 14 sind so ausgerichtet, daß sie den größten Teil des von der Lichtquelle 11 abgegebenen und zumindest annähernd parallelisierten Lichtes, wovon nur einige Lichtstrahlen 13 angedeutet sind, durch die hellroten bzw. rosafarbenen Streifen 9b (bzw. 6b) des Abschnittes 9 (bzw. 6) hindurchleiten. Auch die dem Farbfilter 12 zugewandte Seite der Streifen 9b (bzw. 6b) sind in ansich bekannter Art und Weise mit optischen Elementen 15 in Form von Linsen oder dergleichen ausgestattet, welche das durch sie hindurchtretende Licht an der Außenseite der Abdeckscheibe streuen sollen.

Aus Figur 3 ist weiterhin ersichtlich, daß die in dunklerem Rot ausgeführten Streifen 9a (6a) gemäß Anspruch 5 die Zwischenräume zwischen den in Hellrot bzw. Rosa ausgeführten Streifen 9b (bzw. 6b) ausfüllen.

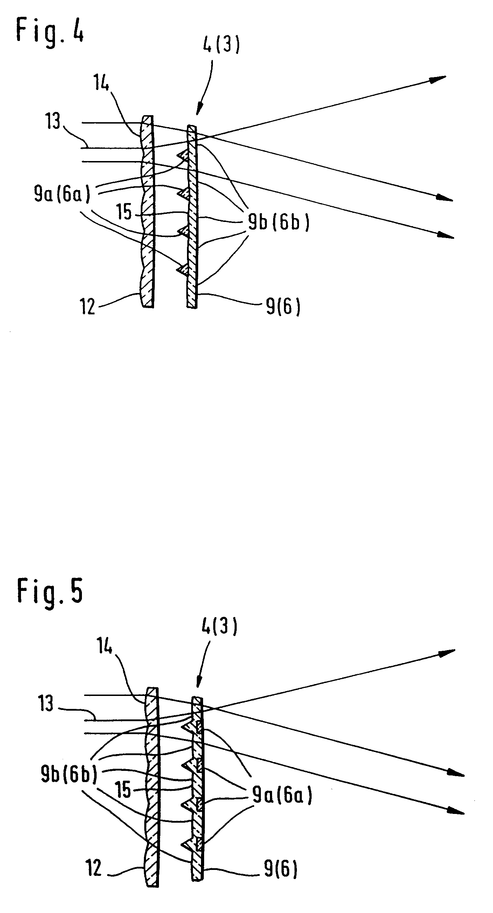

Aus der Figur 4 ist ein Ausführungsbeispiel ersichtlich, in welchem die Merkmale des Anspruchs 4 verwirklicht sind, und aus Figur 5 ist ein anderes Ausführungsbeispiel ersichtlich, in welchem die Merkmale des Anspruchs 6 verwirklicht sind. Abgesehen von diesen Unterschieden trifft für die Figuren 4 und 5 die bisherige Beschreibung ebenfalls zu, so daß auf die entsprechenden Wiederholungen verzichtet werden kann.

Eine vorteilhafte Ausgestaltung der Erfindung gemäß Anspruch 8 sieht noch vor, daß das gesamte Gehäuse 16 (siehe Figur 2) bzw. hinter der Abdeckscheibe 3,4 liegende Bereiche des Leuchtengehäuses 16 bzw. deren Oberfläche in Rot ausgeführt sind.

Abschließend wird noch darauf hingewiesen, daß es sich in der Praxis inzwischen als vorteilhaft erwiesen hat, die Außenseiten der Abdeckscheiben 3, 4 insgesamt noch mit einer glasklaren Schicht zu überziehen. Diese Maßnahme ist in den zeichnerischen Darstellungen nicht extra angegeben.

### Bezugszeichenliste

- 1: Signalleuchte
- 2: Signalleuchte
- 3: Abdeckscheibe
- 4: Abdeckscheibe
- 5: Abschnitt
- 5a: Streifen
- 6: Abschnitt
- 6a: Streifen
- 6b: Streifen
- 7: Abschnitt
- 7a: Streifen
- 8: Abschnitt
- 8a: Streifen
- 9: Abschnitt
- 9a: Streifen
- 9b: Streifen
- 10: Abschnitt
- 10a: Streifen
- 11: Lichtquelle
- 12: Farbfilter
- 13: Lichtstrahl
- 14: Sammellinse
- 15: optisches Element
- 16: Gehäuse

## Patentansprüche

1. Lichtabgabeoptik für Fahrzeugleuchten, insbesondere für Kraftfahrzeugleuchten, mit mehreren Funktionsbereichen für verschiedene Lichtsignale mit in einem Gehäuse (16) der Fahrzeugleuchte befindlicher Lichtquelle (11) und mit einer transparenten Abdeckscheibe (3,4), die zumindest in einem Funktionsbereich eine andere Ruhefarbe als die vorgeschriebene abzugebende Signalfarbe aufweist, dadurch **gekennzeichnet**, daß die transparente Abdeckscheibe (3,4) insgesamt in einem roten Farbton eingefärbt ist, daß zumindest bestimmte Funktionsbereiche der Abdeckscheibe (3,4) streifenförmig ausgebildet sind, wobei in einem Hellrot bzw. Rosa ausgeführte Streifen (6b,9b) mit in einem dunkleren Rot ausgeführten Streifen (6a,9a) abwechseln, daß die in dunklerem Rot ausgeführten Streifen (6a,9a) die Form einer lichtablenkenden Prismenoptik, vorzugsweise einer optisch nicht wirksamen Rückstrahleroptik, aufweisen und von der Lichtquelle (11) kommendes Licht in solche Winkelbereiche hinter der Abdeckscheibe (3,4) ablenken, die außerhalb eines vorgeschriebenen Gesichtsfeldes liegen und daß zumindest in einem dieser bestimmten Funktionsbereiche im Strahlengang zwischen der Lichtquelle (11) und der Abdeckscheibe (3,4) zusätzlich ein Farbfilter (12) mit solchen Eigenschaften angeordnet ist, daß die Farbe des von der Lichtquelle (11) kommenden, durch den Farbfilter (12) und durch die hellroten bzw. rosafarbenen Streifen (6b, 9b) der Abdeckscheibe (3,4) hindurchtretenden Lichtes in die für den betreffenden Funktionsbereich vorgeschriebene Signalfarbe verändert wird.

2. Lichtabgabeoptik nach Anspruch 1, dadurch **gekennzeichnet**, daß die gesamte Abdeckscheibe (3,4) mit abwechselnden hellroten bzw. rosafarbenen Streifen und Streifen in dunklerem Rot ausgeführt ist.

3. Lichtabgabeoptik nach einem der vorhergehenden Ansprüche, dadurch **gekennzeichnet**, daß bei Anwendung hellroter bzw. rosafarbener Streifen (6b,9b) durch Kombination mit einem blauen bzw. blaugrünem Farbfilter (12) im Funktionsbereich des Rückfahrlichtes Licht mit weißer Signalfarbe oder durch Kombination mit einem gelben Farbfilter (12) im Funktionsbereich des Blinklichtes Licht mit gelber bis orangener Signalfarbe oder durch Kombination mit einem kräftig roten Farbfilter (12) im Funktionsbereich des Bremslichtes oder des Schlußlichtes oder des Nebelschlußlichtes Licht mit roter Signalfarbe abgegeben wird.

4. Lichtabgabeoptik nach einem der vorhergehenden Ansprüche, dadurch **gekennzeichnet**, daß die in dunklerem Rot ausgeführten Streifen (5a,6a,7a,8a,9a,10a,) an die der Lichtquelle (1) zugewandten Seite der ansonsten in Hellrot bzw. Rosa ausgeführten Abdeckscheibe (3,4) angespritzt sind.

5. Lichtabgabeoptik nach einem der Ansprüche 1 bis 3, dadurch **gekennzeichnet**, daß die in dunklerem Rot ausgeführten Streifen (6a, 9a) die Zwischenräume zwischen den hellrot bzw. rosa ausgeführten Streifen (6b,9b) ausfüllen.

6. Lichtabgabeoptik nach einem der Ansprüche 1 bis 3, dadurch **gekennzeichnet**, daß die in dunklerem Rot ausgeführten Streifen (6a, 9a) von der der Lichtquelle (11) abgewandten Seite her in die in Hellrot bzw. Rosa ausgeführte Abdeckscheibe (3,4) eingelagert sind und bündig mit der Außenseite der Abdeckscheibe (3,4) abschließen, wobei die lichtablenkende Prismenoptik an der Innenseite der Abdeckscheibe (3,4) von dem hellroten bzw. rosafarbenen Material der Abdeckscheibe (3,4) gebildet und in Richtung Leuchteninneres hinter den in dunklerem Rot ausgeführten Streifen (6a,9a) ausgeformt ist.

7. Lichtabgabeoptik nach einem der vorhergehenden Ansprüche, dadurch **gekennzeichnet**, daß die zusätzlichen Farbfilter (12) mit optischen Mitteln, vorzugsweise mit in Streifen angeordneten Sammellinsen (14) ausgestattet sind, welche den größten Teil des von der Lichtquelle (11) kommenden Lichtes durch die Hellrot bzw. rosafarben ausgeführten Streifen (6b,9b) der Abdeckscheibe (3,4) hindurchleiten.

8. Lichtabgabeoptik nach einem der vorhergehenden Ansprüche, dadurch **gekennzeichnet**, daß das gesamte Gehäuse (16) der Fahrzeugleuchte oder auch nur hinter der Abdeckscheibe (3,4) liegende Bereiche des Leuchtengehäuses (16) bzw. deren Oberfläche in Rot ausgeführt sind.

9. Lichtabgabeoptik nach einem der vorhergehenden Ansprüche, dadurch **gekennzeichnet**, daß die in dunklerem Rot ausgeführten Streifen (6a,9a) als lichtundurchlässige Streifen ausgeführt sind.

10. Lichtabgabeoptik nach Anspruch 9, dadurch **gekennzeichnet**, daß die lichtundurchlässigen Streifen von in dunklerem Rot eingefärbten lichtundurchlässigen Material oder als an der Innenseite der Abdeckscheibe (3,4) erhabene Streifen aus hellrotem bzw. rosafarbenem lichtdurchlässigen Material mit einer zusätzlichen lichtundurchlässigen Beschichtung in dunklerem Rot oder als an der Innenseite der Abdeckscheibe (3,4) erhabene Streifen aus in dunklerem Rot eingefärbtem lichtdurchlässigen Material mit einer zusätzlichen lichtundurchlässigen Beschichtung, vorzugsweise aus hellem bzw. reflektierendem Material gebildet sind.

11. Lichtabgabeoptik nach einem der vorhergehenden Ansprüche, dadurch **gekennzeichnet**, daß die einheitliche Ruhefarbe der Abdeckscheibe (3, 4) bzw. zumindest eines Funktionsbereiches der Abdeckscheibe (3,4) nicht rot sondern eine andere Farbe ist, daß die Streifen der Abdeckscheibe (3,4) in verschiedenen Tönen der anderen Ruhefarbe ausgeführt sind und daß der zusätzliche Farbfilter (12) auf die Farbe der betreffenden Streifen (6a,9a) abgestimmt ist, so daß das von der Lichtquelle (11) kommende Licht in der abzugebenden Signalfarbe gefärbt wird.

12. Lichtabgabeoptik nach Anspruch 11, dadurch **gekennzeichnet**, daß die einheitliche Ruhefarbe der Abdeck-scheibe (3,4) bzw. mindestens eines Funktionsbereiches davon gelb ist, daß die Streifen (6a,6b,9a,9b) in unterschiedlichen Gelbtönen gehalten sind und daß der Farbfilter (12) für den Funktionsbereich des weißen Rückfahrlichtes in einem auf das Gelb der Streifen (6a,9a) abgestimmten Blau ausgeführt ist.

## Claims

1. A light-emitting optical system for vehicle lights, in particular for motor vehicle lights, having a plurality of function zones for different light signals, a light source (11) located in a vehicle light housing (16) and a transparent covering shield (3, 4), which comprises a different inoperative colour in at least one function zone from the prescribed signal colour to be emitted, **characterised in that** overall the transparent covering shield (3, 4) is coloured a shade of red, in that at least particular function zones of the covering shield (3, 4) are in the form of stripes, wherein stripes (6b, 9b) of light red or pink alternate with stripes (6a, 9a) of a darker red, in that the stripes (6a, 9a) of darker red take the form of a light deflecting prism arrangement, preferably an optically inactive reflector arrangement, and deflect light coming from the light source (11) into angular zones behind the covering shield (3, 4) which lie outside a prescribed field of vision and in that a colour filter (12) is additionally arranged at least in one of these particular function zones in the ray path between the light source (11) and the covering shield (3, 4), said colour filter (12) having such characteristics that the colour of the light coming from the light source (11) and passing through the colour filter (12) and through the light red or pink stripes (6b, 9b) of the covering shield (3, 4) is changed to the prescribed signal colour for the relevant function zone.

2. A light-emitting optical system according to claim 1, **characterised in that** the entire covering shield (3, 4) comprises alternating light red or pink stripes and stripes of darker red.

3. A light-emitting optical system according to either one of the preceding claims, **characterised in that**, when light red or pink stripes (6b, 9b) are used in combination with a blue or blue-green colour filter (12) in the function zone of the reversing light, light exhibiting a white signal colour is emitted or, when they are used in combination with a yellow colour filter (12) in the function zone of the indicator light, light exhibiting a yellow or orange signal colour is emitted or, when they are used in combination with an intensely red colour filter (12) in the function zone of the brake light, tail light or fog light, light exhibiting a red signal colour is emitted.

4. A light-emitting optical system according to any one of the preceding claims, **characterised in that** the stripes (5a, 6a, 7a, 8a, 9a, 10a) of darker red are sprayed onto the side, facing the light source (1), of the otherwise light red or pink covering shield (3, 4).

5. A light-emitting optical system according to any one of claims 1 to 3, **characterised in that** the darker red stripes (6a, 9a) fill the gaps between the light red or pink stripes (6b, 9b).

6. A light-emitting optical system according to any one of claims 1 to 3, **characterised in that** the darker red stripes (6a, 9a) are inserted into the light red or pink covering shield (3, 4) from the side remote from the light source (11) and finish flush with the outside of the covering shield (3, 4), wherein the light-deflecting prism arrangement is formed on the inside of the covering shield (3, 4) from the light red- or pink-coloured material of the covering shield (3, 4) and is shaped so as to project towards the inside of the light behind the stripes (6a, 9a) of darker red.

7. A light-emitting optical system according to any one of the preceding claims, **characterised in that** the additional colour filters (12) are provided with optical means, preferably with convergent lenses (14) arranged in stripes, which conduct the majority of the light coming from the light source (11) through the light red or pink stripes (6b, 9b) of the covering shield (3, 4).

8. A light-emitting optical system according to any one of the preceding claims, **characterised in that** the entire vehicle light housing (16) or only areas of the light housing (16) located behind the covering shield (3, 4) or the surface of said light housing (16) is/are coloured red.

9. A light-emitting optical system according to any one of the preceding claims, **characterised in that** the darker red stripes (6a, 9a) take the form of opaque stripes.

10. A light-emitting optical system according to claim 9, **characterised in that** the opaque stripes are formed of opaque material coloured darker red or take the form of stripes, raised on the inside of the covering shield (3, 4), of light-red or pink opaque material with an additional opaque coating in darker red or of stripes, raised on the inside of the covering shield (3, 4), of opaque material coloured darker red with an additional opaque coating, preferably of light-coloured or reflecting material.

11. A light-emitting optical system according to any one of the preceding claims, **characterised in that** the single inoperative colour of the covering shield (3, 4) or at least one function zone of the covering shield (3, 4) is not red but another colour, in that the stripes of the covering shield (3, 4) exhibit differing shades of the other inoperative colour and in that the additional colour filter (12) is conformed to the colour of the relevant stripes (6a, 9a), such that the light coming from the light source (11) exhibits the signal colour to be emitted.

12. A light-emitting optical system according to claim 11, **characterised in that** the single inoperative colour of the covering shield (3, 4) or at least one function zone thereof is yellow, in that the stripes (6a, 6b, 9a, 9a) exhibit various shades of yellow and in that the colour filter (12) for the function zone of the white reversing light is made of a blue conformed to the yellow of the stripes (6a, 9a).

## Revendications

1. Optique de transmission de lumière pour feux de véhicule, notamment pour feux de véhicule automobile, comprenant plusieurs zones fonctionnelles correspondant à différentes signalisations lumineuses, une source de lumière (11) située dans un boîtier (16) du feu de véhicule et une glace de recouvrement (3, 4) transparente qui comporte, au moins dans une zone fonctionnelle, une autre couleur de repos que la couleur de signalisation prescrite à transmettre, caractérisée en ce que la glace de recouvrement (3, 4) est colorée dans son ensemble dans une teinte de couleur rouge, en ce qu'au moins des zones fonctionnelles déterminées de la glace de recouvrement (3, 4) sont réalisées en forme de bandes, des bandes (6b, 9b) rouge clair ou rose alternant avec des bandes (6a, 9a) rouge foncé, en ce que les bandes (6a, 9a) rouge foncé se présentent sous la forme d'une optique prismatique déviant la lumière, de préférence d'une optique de catadioptre inactive sur le plan optique, et dévient la lumière provenant de la source de lumière (11) dans des zones angulaires, situées après la glace de recouvrement (3, 4), qui sont en dehors d'un champ de vision prescrit et en ce qu'au moins dans l'une de ces zones fonctionnelles déterminées, il est en outre prévu, disposé sur le trajet des rayons entre la source de lumière (11) et la glace de recouvrement (3, 4), un filtre de couleur (12) possédant des propriétés telles que la couleur de la lumière provenant de la source de lumière (11) et traversant le filtre de couleur (12) et les bandes (6b, 9b) de couleur rouge clair ou rose de la glace de recouvrement (3, 4) est modifiée en donnant la couleur de signalisation prescrite pour la zone fonctionnelle concernée.

2. Optique de transmission de lumière suivant la revendication 1, caractérisée en ce que toute la glace de recouvrement (3, 4) est réalisée avec des bandes de couleur rouge clair ou rose et des bandes rouge foncé qui alternent.

3. Optique de transmission de lumière suivant l'une des revendications précédentes, caractérisée en ce que, lorsque des bandes (6b, 9b) de couleur rouge clair ou rose sont utilisées, une lumière de couleur de signalisation blanche est émise dans la zone de fonctionnement du feu de recul par combinaison avec un filtre de couleur (12) bleu ou bleu-vert ou une lumière de couleur de signalisation jaune à orangé est émise dans la zone de fonctionnement du feu clignotant par combinaison avec un filtre de couleur (12) jaune ou une lumière de couleur de signalisation rouge est émise dans la zone de fonctionnement du feu de freinage, du feu stop ou du feu de brouillard par combinaison avec un filtre de couleur (12) rouge intense.

4. Optique de transmission de lumière suivant l'une des revendications précédentes, caractérisée en ce que les bandes (5a, 6a, 7a, 8a, 9a, 10a) rouge foncé sont déposées par projection sur la face tournée vers la source de lumière (1) de la glace de recouvrement (3, 4) qui, pour le reste, est rouge clair ou rose.

5. Optique de transmission de lumière suivant l'une des revendications 1 à 3, caractérisée en ce que les bandes (6a, 9a) rouge foncé remplissent les espaces intermédiaires séparant les bandes (6b, 9b) rouge clair ou rose.

6. Optique de transmission de lumière suivant l'une des revendications 1 à 3, caractérisée en ce que les bandes (6a, 9a) rouge foncé sont mises en place dans la glace de recouvrement (3, 4) rouge clair ou rose à partir du côté situé à l'opposé de la source de lumière (11) et ferment la face extérieure de la glace de recouvrement (3, 4) en étant de niveau avec celle-ci, l'optique prismatique déviant la lumière étant formée, par la matière de couleur rouge clair ou rose de la glace de recouvrement (3, 4), sur la face intérieure de la glace de recouvrement (3, 4) et étant conformée vers l'intérieur du feu en retrait par rapport aux bandes (6a, 9a) rouge foncé.

7. Optique de transmission de lumière suivant l'une des revendications précédentes, caractérisée en ce que les filtres de couleur (12) supplémentaires sont pourrvs de moyens optiques, de préférence de lentilles convergentes (14) disposées en bandes, qui conduisent la plus grande partie de la lumière provenant de la source de lumière (11) à travers les bandes (6b, 9b) de couleur rouge clair ou rose de la glace de recouvrement (3, 4).

8. Optique de transmission de lumière suivant l'une des revendications précédentes, caractérisée en ce que tout le boîtier (16) des feux de véhicule ou aussi uniquement des zones du boîtier de feux (16) situées à l'arrière de la glace de recouvrement (3, 4), plus précisément leurs surfaces, sont réalisés en rouge.

9. Optique de transmission de lumière suivant l'une des revendications précédentes, caractérisée en ce que les bandes (6a, 9a) sont réalisées sous forme de bandes opaques.

10. Optique de transmission de lumière suivant la revendication 9, caractérisée en ce que les bandes opaques sont constituées d'une matière opaque colorée en rouge foncé ou sous forme de bandes en matière transparente de couleur rouge clair ou rose en relief sur la face intérieure de la glace de recouvrement (3, 4) et comportant un revêtement opaque supplémentaire en rouge foncé ou sous forme de bandes en matière transparente colorée en rouge foncé en relief sur la face intérieure de la glace de recouvrement (3, 4) et comportant un revêtement opaque supplémentaire, de préférence en matière claire ou réfléchissante.

11. Optique de transmission de lumière suivant l'une des revendications précédentes, caractérisée en ce que la couleur de repos uniforme de la glace de recouvrement (3, 4), ou au moins d'une zone fonctionnelle de la glace de recouvrement (3, 4) n'est pas rouge, mais est d'une autre couleur, en ce que les bandes de la glace de recouvrement (3, 4) sont réalisées en différentes teintes de l'autre couleur de repos et en ce que le filtre de couleur (12) supplémentaire est adapté à la couleur des bandes concernées (6a, 9a) de façon que la lumière provenant de la source de lumière (11) soit colorée dans la couleur de signalisation à transmettre.

12. Optique de transmission de lumière suivant la revendication 11, caractérisée en ce que la couleur de repos uniforme de la glace de recouvrement (3, 4), ou d'au moins une zone fonctionnelle de celle-ci, est jaune, en ce que les bandes (6a, 6b, 9a, 9b) sont maintenues dans des teintes de jaune différentes et en ce que le filtre de couleur (12) correspondant à la zone fonctionnelle du feu de recul blanc est réalisé en un bleu adapté au jaune des bandes (6a, 9a).
